# EUROPEAN PATENT SPECIFICATION

(11) **EP 1 199 843 B1**
(45) Date of publication and mention of the grant of the patent: **10.10.2007**
(21) Application number: 01203097.9
(22) Date of filing: 03.08.2001
(51) Int. Cl.: H04L 12/28, H04L 29/06

(54) **Lan user protocol**
Benutzerprotokoll für lokales Netzwerk
Protocole utilisateur pour réseau local

(30) Priority: 15.09.2000 GB 0022604
(43) Date of publication of application: 24.04.2002
(73) Proprietor: ROKE MANOR RESEARCH LIMITED, Romsey, Hampshire SO51 0ZN (GB)
(72) Inventor: Gallagher, Michael, Southampton SO15 2LQ (GB); Hancock, Robert, Bitterne Park, Southampton SO18 1NW (GB)
(74) Representative: Neill, Andrew Peter

(56) References cited:
- DOMMETY G ET AL: "mobile ip authentication, authorization, and accounting requirements draft-ietf-aaa-mobile-ip-req-00.txt" INTERNET DRAFT, April 1999 (1999-04), XP002233198 Retrieved from the Internet: <URL:www.globecom.net/ietf/draft/draft-iet f-aaa-mobile-ip-req-00.txt> [retrieved on 2003-02-25]
- PERKINS C: "Mobile IP and security issue: an overview" NOKIA, US, 25 October 1999 (1999-10-25), pages 131-148, XP010514313

## Description

This invention relates to operating protocols for Local Area Network (LAN) systems, and it relates especially to such protocols as can cope with the problems of user-mobility between LANs, as afforded particularly by wireless LAN (W-LAN) systems.

In W-LAN systems, it is often the case that a user, subscribing with one network operator (hereinafter called "the Home Operator" for that user), wishes to connect, as a "visitor", to one or more other LAN sites; basing such connection, for charging and other operational purposes, on that user's subscription with its Home Operator. This activity is commonly referred to as Wireless-LAN roaming, and existing protocols permitting the activity are cumbersome, as the necessary authentication procedure requires user intervention at each visit.

This invention provides a protocol that permits a visiting user, once authenticated as a visitor with regard to a particular LAN, to revisit that LAN for as long as the user's authentication with the Home Operator remains sound, without further user intervention.

The document by L. PERKINS "Mobile IP and security issue: an overview" NOKIA, US, 25 October 1999 (1999-10-25), pages 131-148, XP 010514313 describes security issues in LANs between home and visitor domains.

According to the invention there is provided a method of operating LAN systems characterized whereby the operator of each LAN administers home (H) network and Visitor (V) network authentication, authorisation and accounting (AAA) servers and wherein a subscriber to a first LAN wishing to connect for the first time to a second LAN conveys to the operator of the second LAN, by user intervention, information, identifying both the subscriber and the operator of the first LAN, sufficient to enable the V-AAA server of the second LAN to communicate with the H-AAA server of the first LAN so as to authenticate the proposed connection; the V-AAA storing information linking the subscriber to the operator of the first LAN for so long as the subscriber remains authorised by the operator of the first LAN, whereby subsequent connections by the subscriber to the second LAN are made without user intervention.

This is achieved because the subscriber's identity, when announced to the second LAN as part of the routine connect procedure, is correlated by the V-AAA server with the previously-given identity of the H-AAA server for that subscriber, and the V-AAA automatically communicates with the H-AAA to derive the necessary authorisation and to organise the necessary charging, etc.

The V-AAA server thus stores the subscriber/H-AAA linking data until such time as the H-AAA server supplies it with information to the effect that the subscriber's authorisation is no longer valid or until an authentication transaction with the H-AAA server fails. At this point the link is broken, and subsequent attempts by the subscriber to connect with the second LAN will fail, unless they are, as a result of further user-intervention, shown to be authorised by the H-AAA server of another LAN system.

Preferably, the information supplied by the subscriber, by way of user intervention, includes the subscriber's MAC address and an identifier, such as a user name or MSISDN number, that allows the operator of the subscriber's Home Network to be identified.

This permits the V-AAA server of the second LAN operator to utilise the identifier to locate the H-AAA server of the Home Operator for that subscriber, and to request the H-AAA server to authenticate the desired connection. Once this has been performed, charging information for the session can be forwarded to the H-AAA server enabling the H-AAA server operator to bill the user and make payment to the visited LAN reporter.

Further, when that subscriber connects to the second LAN on a subsequent occasion, the information held at the V-AAA server of the second LAN and linking the subscriber's address to the Home Network identifier, allows authentication of the requested connection to be effected automatically and without user intervention on the part of the subscriber.

In order that the invention may be fully understood and readily carried into effect, one embodiment thereof will now be described, by way of example only, with reference to the accompanying drawings, the figures of which show, in schematic form, the operation of a protocol in accordance with one embodiment of the invention.

Referring now to the drawings, there is shown schematically within the outline 1 a LAN operated by a first network operator A. Operator A operates H-AAA and V-AAA servers, 2 and 3 respectively, in respect of the LAN 1. Subscribers to the network 1 are operating on their Home Network, and thus communicate with the H-AAA server 2 for all operational and charging purposes related to connections to that LAN.

Similarly, there is shown schematically within the outline 4 a LAN operated by a second network operator B. Operator B operates H-AAA and V-AAA servers, 5 and 6 respectively, in respect of the LAN 4. Subscribers to the network 4 are operating on their Home Network, and thus communicate with the H-AAA server 5 for all operational and charging purposes related to connections to that LAN.

As indicated by the dashed line connections 7 and 8, the H-AAA server 2 is in communication with the V-AAA server 6 and, indeed with the V-AAA servers of further LAN systems (not shown) to which subscribers to the LAN 1 may make connection as visitors. Likewise, the H-AAA server 5 is in communication with the V-AAA server 3 and, indeed with the V-AAA servers of further LAN systems (not shown) to which subscribers to the LAN 4 may make connection as visitors.

Within the outline 1 there are shown schematically first and second subscribers 9 and 10, these being subscribers of the network 4 but wishing to connect to the network 1. Likewise, within the outline 4 there are shown schematically first and second subscribers 11 and 12, these being subscribers of the network 1 but wishing to connect to the network 4. These are visiting subscribers and, in each case and on the first occasion of such connection, there will have to be user intervention to establish the flow of sufficient information, between such subscribers and the V-AAA server of the network to which they wish to connect, to permit the necessary authorisations and charging procedures to be out in place. This user intervention and the associated information flow is indicated schematically by the dashed lines 13 - 16.

As part of the initial process setting up the relationship between each subscriber and its Home Network Operator, the subscriber is given an identifier which also identifies its Home Network in some convenient standardised way, such as NAI or MSISDN for example.

When that subscriber first seeks to connect, as a visitor, to another network, the subscriber is, as part of a setting-up procedure requiring user intervention, called upon to identify itself, for example by its MAC address or any other id that is automatically provided during normal WLAN authentication procedures, and also to enter an identifier, such as a user name or MSISDN, that allows the subscriber's Home Network to be determined. Utilising that identifier, the V-AAA server locates the H-AAA server at the subscriber's Home Network and seeks authentication of the subscriber.

Assuming that such authentication is forthcoming, the V-AAA server keeps a copy of the MAC address of the subscriber's WLAN device, along with the H-AAA identifier. This information, which links the identity of subscriber's WLAN device to that of its home network, is stored by the V-AAA for future use. Hence, when the subscriber seeks connection to that LAN on subsequent occasions, the linked identification data permits the necessary authentication to proceed without user intervention. This state of affairs persists for as long as the subscriber remains authenticated by the same Home Network, and is true for all public LANs within the administrative control of the same visitor network operator. Once authentication fails, the linked identification data are purged, with the consequence that automatic authentication of that subscriber as a visitor to a LAN will cease, unless or until the subscriber establishes, through a repeat of the initial process involving user intervention, accreditation by a new Home Operator.

The invention permits operators to add new LAN sites to their operations without modifying externally established trust relationships, and moreover to add new partner operators without modifying internal trust relationships.

It may be appropriate, depending upon the nature of any rules controlling the extent to which W-LAN subscribers can roam, to associate each MAC address (or other device identifier) with a W-LAN network type, so that MAC addresses or other identifiers that are shared by different W-LAN technologies, such as IEEE 802.11 and Bluetooth, are not ambiguous.

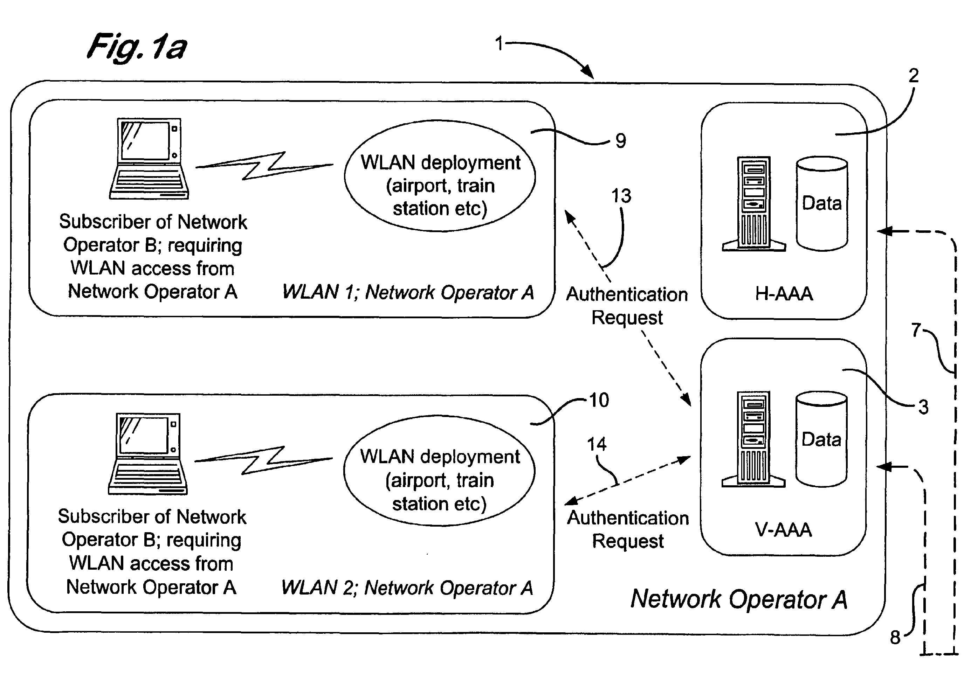

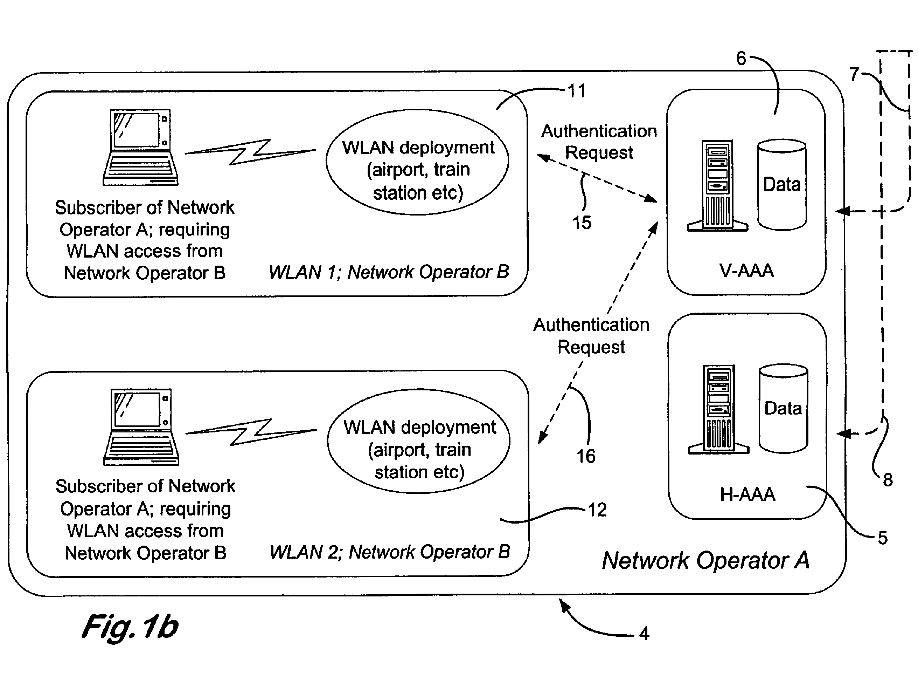

Although the invention has been described with regard to one particular embodiment thereof, it is not intended that the scope of the claims of this application be limited to that embodiment, and alternative arrangements will be evident in many respects to those skilled in the art. For example, the H-AAA and V-AAA servers (such as 2 and 3) associated with any given LAN need not consist of respective, stand-alone units, as shown in the drawing, but may instead be combined into a common unit.

## Claims

1. A user method of operating LAN systems **characterized** whereby the operator of each LAN administers home (H) network and Visitor (V) network authentication, authorisation and accounting (AAA) servers and wherein a subscriber to a first LAN wishing to connect for the first time to a second LAN conveys to the operator of the second LAN, by user intervention, information, identifying both the subscriber and the operator of the first LAN, sufficient to enable the V-AAA server of the second LAN to communicate with the H-AAA server of the first LAN so as to authenticate the proposed connection; the V-AAA server storing information linking the subscriber to the operator of the first LAN for so long as the subscriber remains authorised by the operator of the first LAN, whereby subsequent connections by the subscriber to the second LAN are made without user intervention.

2. A method according to Claim 1 wherein the subscriber's identity, when announced to the second LAN as part of the routine connect procedure, is correlated by the V-AAA server with the previously-given identity of the H-AAA server for that subscriber, and the V-AAA server automatically communicates with the H-AAA server to derive the necessary authentication and authorisation and subsequently delivers accounting information.

3. A method according to Claim 2 wherein the V-AAA server stores the subscriber/H-AAA server linking data until such time as the H-AAA server supplies it with information to the effect that the subscriber's authorisation is no longer valid or until an authentication transaction fails.

4. A method according to Claim 3 wherein, in order to re-establish connection to the second LAN, the subscriber demonstrates, as a result of further user-intervention, authorisation deriving from an H-AAA server of another LAN system.

5. A method according to any preceding claim wherein the information supplied by the subscriber, by way of user intervention, includes the subscriber's MAC address or any other automatically presented identifier and an identifier that allows the operator of the subscriber's Home Network to be identified.

6. A method according to Claim 5 wherein said identifier comprises a user name or MSISDN number.

7. A method according to Claim 5 or Claim 6 wherein the V-AAA server of the second LAN operator utilises the identifier to locate the H-AAA server of the Home Operator for that subscriber, and to request the H-AAA server to authenticate the desired connection.

## Patentansprüche

1. Benutzerverfahren zum Betreiben von LAN-Systemen, **dadurch gekennzeichnet, dass** der Betreiber eines jeden LAN einen Heimatnetz- (Home Network, H-) und einen Besuchernetz-(Visitor Network, V-) Authentifizierungs-, Autorisierungs- und Abrechungs- (AAA-) Server verwaltet, und wobei ein Teilnehmer eines ersten LAN, der zum ersten Mal eine Verbindung zu einem zweiten LAN aufbauen möchte, an den Betreiber des zweiten LAN durch Benutzereingriff Informationen übermittelt, welche sowohl den Teilnehmer als auch den Betreiber des ersten LAN kennzeichnen und ausreichend sind, um den V-AAA-Server des zweiten LAN in die Lage zu versetzen, mit dem H-AAA-Server des ersten LAN zu kommunizieren, um die beabsichtigte Verbindung zu authentifizieren; wobei der V-AAA-Server Informationen, die den Teilnehmer mit dem Betreiber des ersten LAN verknüpfen, so lange speichert, wie der Teilnehmer durch den Betreiber des ersten LAN autorisiert bleibt, wodurch anschließende Verbindungen durch den Teilnehmer zu dem zweiten LAN ohne Benutzereingriff hergestellt werden.

2. Verfahren nach Anspruch 1, wobei die Identität des Teilnehmers, wenn sie dem zweiten LAN als Teil der routinemäßigen Verbindungsaufbauprozedur gemeldet wird, von dem V-AAA-Server mit der zuvor angegebenen Identität des H-AAA-Servers für diesen Teilnehmer in Verbindung gebracht wird und der V-AAA-Server automatisch mit dem H-AAA-Server kommuniziert, um die notwendige Authentifizierung und Autorisierung abzuleiten, und anschließend Informationen für die Gebührenberechnung liefert.

3. Verfahren nach Anspruch 2, wobei der V-AAA-Server die Daten der Verknüpfung Teilnehmer-/H-AAA-Server bis zu einem solchen Zeitpunkt speichert, zu dem ihm der H-AAA-Server Informationen liefert, die besagen, dass die Autorisierung des Teilnehmers nicht mehr gültig ist, oder bis eine Authentifizierungs-Transaktion fehlschlägt.

4. Verfahren nach Anspruch 3, wobei der Teilnehmer, um die Verbindung zu dem zweiten LAN wiederherzustellen, im Ergebnis eines weiteren Benutzereingriffs eine Autorisierung nachweist, die von einem H-AAA-Server eines anderen LAN-Systems stammt.

5. Verfahren nach einem der vorhergehenden Ansprüche, wobei die Informationen, die von dem Teilnehmer mittels eines Benutzereingriffs geliefert werden, die MAC-Adresse oder irgendeine andere automatisch präsentierte Kennung des Teilnehmers beinhalten, sowie eine Kennung, welche es ermöglicht, den Betreiber des Heimatnetzes des Teilnehmers zu identifizieren.

6. Verfahren nach Anspruch 5, wobei die besagte Kennung einen Benutzernamen oder eine MSISDN-Nummer umfasst.

7. Verfahren nach Anspruch 5 oder Anspruch 6, wobei der V-AAA-Server des zweiten LAN-Betreibers die Kennung benutzt, um den H-AAA-Server des Heimatnetzbetreibers für diesen Teilnehmer zu lokalisieren und den H-AAA-Server aufzufordern, die gewünschte Verbindung zu authentifizieren.

## Revendications

1. Procédé d'utilisateur permettant l'exploitation de systèmes de réseau local, **caractérisé en ce que** l'opérateur de chaque réseau local gère des serveurs d'authentification, d'autorisation et d'administration comptable (AAA) du réseau d'origine (H) et du réseau du visiteur (V), et dans lequel un abonné à un premier réseau local souhaitant se connecter pour la première fois à un deuxième réseau local transmet à l'opérateur du deuxième réseau local, par une intervention de l'utilisateur, des informations identifiant à la fois l'abonné et l'opérateur du premier réseau local, suffisantes pour permettre au serveur V-AAA du deuxième réseau local de communiquer avec le serveur H-AAA du premier réseau local de façon à authentifier la connexion proposée ; le serveur V-AAA stockant des informations associant l'abonné à l'opérateur du premier réseau local aussi longtemps que l'abonné bénéficie d'une autorisation de l'opérateur du premier réseau local, de sorte que les connexions ultérieures de l'abonné au deuxième réseau local sont établies sans intervention de l'utilisateur.

2. Procédé selon la revendication 1, dans lequel, quand l'identité de l'abonné est annoncée au deuxième réseau local lors d'une étape de la procédure de connexion de la routine, elle est corrélée par le serveur V-AAA à l'identité donnée précédemment du serveur H-AAA pour cet abonné et le serveur V-AAA communique automatiquement avec le serveur H-AAA de façon à déduire l'authentification et l'autorisation nécessaires, puis il délivre les informations d'administration comptable.

3. Procédé selon la revendication 2, dans lequel le serveur V-AAA stocke les données associant abonné/serveur H-AAA jusqu'au moment où le serveur H-AAA lui envoie des informations lui signifiant que l'autorisation de l'abonné n'est plus valable, ou jusqu'à ce qu'une transaction d'authentification échoue.

4. Procédé selon la revendication 3, dans lequel, afin de rétablir une connexion au deuxième réseau local, l'abonné présente une autorisation, suite à une intervention supplémentaire de l'utilisateur, émanant d'un serveur H-AAA d'un autre système de réseau local.

5. Procédé selon une quelconque revendication précédente, dans lequel les informations transmises par l'abonné, à titre d'intervention de l'utilisateur, comprennent l'adresse MAC de l'abonné ou un quelconque autre identifiant présenté automatiquement, ainsi qu'un identifiant qui permet d'identifier l'opérateur du réseau d'origine de l'abonné.

6. Procédé selon la revendication 5, dans lequel ledit identifiant comprend un nom d'utilisateur ou un numéro RNIS d'abonné mobile (MSISDN).

7. Procédé selon la revendication 5 ou la revendication 6, dans lequel le serveur V-AAA du deuxième opérateur de réseau local utilise l'identifiant pour localiser le serveur H-AAA de l'opérateur d'origine pour cet abonné et pour demander au serveur H-AAA d'authentifier la connexion désirée.
